**Europäisches Patentamt**

**European Patent Office**

**Office européen des brevets**

(19)

(11) Numéro de publication: **0 031 772 B1**

(12) # FASCICULE DE BREVET EUROPEEN

(45) Date de publication du fascicule du brevet:
**25.04.84**

(51) Int. Cl.³: **C 03 B 18/02,** C 03 B 18/18

(21) Numéro de dépôt: **80401832.3**

(22) Date de dépôt: **19.12.80**

(54) **Procédé et dispositif pour la fabrication de verre par flottage.**

(30) Priorité: **21.12.79 FR 7931477**

(43) Date de publication de la demande:
**08.07.81 Bulletin 81/27**

(45) Mention de la délivrance du brevet:
**25.04.84 Bulletin 84/17**

(84) Etats contractants désignés:
**BE DE IT LU NL SE**

(56) Documents cités:
**FR - A - 2 094 030**
**FR - A - 2 254 527**
**FR - A - 2 372 122**
**US - A - 3 737 295**

(73) Titulaire: **SAINT-GOBAIN VITRAGE, Les Miroirs 18, avenue d'Alsace, F-92400 Courbevoie (FR)**

(72) Inventeur: **Eischen, Gaston, Ellermühlerstrasse 15, Stolberg (DE)**
Inventeur: **Eulenberg, Thomas, Diepenbenden 13, Aachen (DE)**
Inventeur: **Gowert, Helmut, Mauerfeldchen 48, Würselen (DE)**
Inventeur: **Grablowitz, Rainer, 13 Plaatweg, B-4721 Kelmis (BE)**
Inventeur: **Pernet, Michel, 204 Chaussée de Bruxelles, B-1190 Bruxelles (BE)**

(74) Mandataire: **Eudes, Marcel et al, Saint-Gobain Recherche 39 Quai Lucien Lefranc, F-93304 Aubervilliers Cedex (FR)**

# Procédé et dispositif pour la fabrication de verre par flottage

La présente invention concerne la fabrication de verre plat par flottage et notamment de verre plat de faible épaisseur, en particulier d'épaisseur inférieure à 3 mm.

Dans la fabrication de verre plat par flottage, du verre fondu est déversé sur un bain de métal en fusion, généralement d'étain ou d'un alliage à prédominance d'étain où il forme un ruban continu qui se refroidit et est extrait à l'aide de rouleaux extracteurs qui l'acheminent dans un four de recuisson appelé étenderie.

L'épaisseur du ruban de verre est déterminée par l'effort de traction exercé par les rouleaux extracteurs et par l'action éventuelle de rouleaux de bord, moletés, agissant sur les bords supérieurs du ruban de verre.

Dans la fabrication du verre mince, le verre subit un étirage et il atteint des vitesses de déplacement élevées susceptibles d'atteindre 15 à 30 mètres à la minute et plus, selon l'épaisseur fabriquée et la productivité du dispositif. Ces vitesses de déplacement élevées provoquent sous le ruban de verre un courant d'étain dirigé vers l'extrémité de sortie du bain plus froide, et désigné par la suite par courant aval.

Le métal entraîné par le ruban suivant ce courant aval vient buter sur la paroi de sortie du bain puis par réflexion, il forme un courant de retour dirigé vers l'amont et désigné par la suite par courant amont. Ce courant amont est surtout important entre les bords du ruban de verre et les parois latérales du bain.

Ce courant amont, plus froid, vient se mélanger au courant aval provoquant des turbulences et, par zones, des variations de températures élevées notamment dans la zone d'étirage où le verre est particulièrement sensible à ces variations de températures. Ces turbulences sont néfastes car elles modifient la viscosité du verre et de ce fait, l'étirage n'est pas homogène. Il s'en suit des déformations du ruban de verre et également une instabilité latérale dudit ruban de verre qui se déplace périodiquement d'un côté à l'autre du bain. Cette instabilité peut perturber les températures au niveau de l'étenderie et par là provoquer un mauvais recuit et de la casse.

Pour remédier à ces inconvénients, il a été proposé par la publication de brevet français 2 254 527 de disposer des barrières transversales sous le ruban de verre, afin d'empêcher le courant amont réfléchi par la paroi de sortie du four de flottage de se mélanger avec le courant aval dans la zone d'étirage. Pour ce faire, un premier barrage est prévu sous le ruban de verre au niveau de l'extrémité aval de la zone d'étirage; ce barrage ne laisse qu'une partie du courant aval s'écouler sous le ruban et contraint le courant amont à passer le long des bords dudit ruban. Un second barrage espacé du premier vers l'amont et situé dans la région d'accélération maximale du verre, agit de la même façon à ce second endroit ne laissant qu'une partie du courant aval s'écouler sous le ruban de verre et contraignant le courant amont à passer le long des bords dudit ruban.

Il a également été proposé par la publication de brevet français 2 372 122 d'associer à un barrage transversal des déflecteurs fixes situés en amont de celui-ci, qui ont pour rôle d'intercepter les courants de métal longeant les parois latérales de la cuve.

Un des inconvénients des dispositifs cités est que la partie inférieure du courant aval vient buter contre les barrages transversaux sous le ruban de verre ce qui crée d'autres turbulences indésirables.

Il a encore été proposé, par la publication de brevet français 2 094 030, de freiner le courant amont de métal en utilisant des moteurs d'induction linéaires associés à des barrages latéraux disposés dans la zone où le verre est déjà figé; les moteurs d'induction linéaires engendrent des courants de métal allant du milieu du bain vers les côtés pour être repris par les barrages latéraux qui complètent l'action de ces moteurs.

Aucun des dispositifs décrits précédemment n'élimine totalement les courant latéraux amont, et de ce fait, il n'élimine pas l'instabilité latérale du ruban de verre sur le bain, due notamment à ces courants d'étain d'origine thermique, instabilité à laquelle s'ajoutent des variation périodiques inévitables de la largeur du ruban de verre, pour provoquer des perturbations dans le régime thermique de l'étenderie et par suite, comme il a déjà été signalé, un mauvais recuit du verre et des pertes de découpe non négligeables.

Toujours afin d'empêcher le ruban de verre de décrire un mouvement en zig-zag, il a aussi été proposé par le brevet US 3 737 295 d'appliquer un côté du ruban de verre contre un guide latéral. A cet effet, on associe au guide latéral un barrage latéral partiel que l'on place d'un côté de la cuve dans la zone d'étirage ou en aval de cette zone. Ces moyens dissymétriques créent des courants de convention dans le bain, qui exercent une poussée du ruban contre le guide.

De même que les autres dispositif précédemment cités, celui-ci n'élimine pas les courants latéraux amont et les inconvénients qui s'en suivent tels les turbulences et les variations de températures qui sont la cause d'un étirage non homogène.

La présente invention obvie aux inconvénients cités.

Elle propose un procédé de fabrication de verre plat selon lequel on déverse du verre fondu sur un bain de métal en fusion, on le fait avancer sous forme d'un ruban de verre sur ledit bain de métal et on confère au ruban par accélération une vitesse d'extraction finale, ce qui provoque un entraînement du métal suivant un courant aval qui se réfléchit pour former un courant amont de retour plus froid, ce procédé étant caractérisé en ce qu'on laisse le courant aval libre de s'écouler régulièrement sous l'action d'entraînement du ruban de verre et on interrompt totalement ou presque et uniquement les parties latérales du courant amont, sur toute leur profondeur, en plaçant des barrières latérales ou déflecteurs (12, 13, 14) symétriques par rapport à l'axe du ruban, au moins dans la zone d'étirage du verre, et on canalise le courant amont sous le courant aval et le ruban de verre.

Par le procédé suivant l'invention, on évite des variations de températures élevées à la surface du bain dans la zone d'étirage et on obtient une bonne stabilité transversale du ruban de verre sur le bain.

Suivant une mise en oeuvre préférée de l'invention, on interrompt totalement les courants latéraux dirigés vers l'amont, en au moins 3 endroits de chaque côté du ruban de verre. Une première interruption peut avoir lieu dans la partie aval du bain, là où le verre est déjà figé. Cette interruption a alors pour but d'annuler le courant amont proche de son origine dans ses deux parties latérales encore désignées par courants latéraux amont. L'interruption a encore lieu deux fois dans la zone d'étirage où elle a pour but de rendre le bain au contact du ruban de verre plus homogène thermiquement.

Suivant une mise en oeuvre de l'invention, l'interruption des courants latéraux amont dans la zone d'étirage a lieu autant de fois que nécessaire.

Un autre avantage de l'action exclusive sur les courants latéraux que propose l'invention, est que la régulation thermique particulière du bain qu'elle engendre permet de travailler à des températures plus basses que dans le cas où on n'agit pas sur les courants latéraux amont, ceci en particulier dans la zone d'étirage.

Il en résulte d'une part une économie importante d'énergie et une réduction des organes de chauffage. A titre d'indication, on peut économiser de l'ordre de 700 kWh dans une fabrication de 600 tonnes de verre de 2,1 mm d'épaisseur.

D'autre part, par suite de la stabilité du ruban et de la maitrise de la température du bain, le nombre de rouleaux de bord peut être réduit.

En outre, en diminuant les températures dans la zone d'amincissement du ruban de verre, on obtient, notamment pour un verre mince, un figeage plus rapide du ruban et par là, une diminution du rapport de l'épaisseur des bords à l'épaisseur du ruban. En diminuant ce rapport, donc la sur-épaisseur des bords, on obtient un refroidissement plus homogène conduisant à un meilleur recuit dans l'étenderie.

Par le procédé selon l'invention les variations de température à la surface du bain, notamment dans la zone d'étirage, sont limitées.

Par contre, sous le ruban du verre, les différences de températures du bain entre sa surface et son fond sont élevées. Ceci va à l'encontre de la technique antérieure dont un des objectifs était de réduire autant que possible ces différences de températures entre les deux niveaux. Suivant l'invention, des différences de températures de l'ordre de 30° C sont courantes dans la zone d'étirage sous le ruban alors que dans la technique antérieure ces différences s'élevaient à 10° C au plus.

L'étirage proprement dit du verre se situe dans une zone décalée vers l'amont par rapport à un étirage sans barrages latéraux. De ce fait, l'influence du courant amont s'en trouve encore naturellement réduite.

L'invention concerne aussi un dispositif pour la mise en œuvre du procédé ereprisé précédemment.

Selon l'invention, le dispositif comprenant une cuve allongée contenant un bain de métal fondu, des moyens d'amenée du verre sur le bain à débit réglé, des moyens pour le faire avancer sous forme d'un ruban, des régulateurs thermiques portant le ruban de verre à la viscosité voulue, des moyens provoquant un étirage du ruban de verre, est caractérisé en ce qu'il comprend en outre des barrières latérales ou déflecteurs symétriques par rapport à l'axe du ruban s'enfonçant sur toute la profondeur du bain pour interrompre totalement ou presque et uniquement les parties latérales du courant amont entre le ruban de verre et les parois de la cuve, lesdits déflecteurs étant disposés au moins dans la zone d'étirage du ruban de verre et s'étendent des parois latérales de la cuve jusqu'à une distance inférieurs à 10 cm des bords du ruban de verre.

Ces déflecteurs, dont la génératrice supérieure émerge généralement du bain pénètrent jusqu'au fond de celui-ci, et par là interrompent les parties latérales du courant amont sur toute leur profondeur.

Dans une réalisation préférée et particulièrement avantageuse du dispositif, les déflecteurs sont orientables, étant montés sur des articulations et peuvent pivoter autour d'axes verticaux passant par les parois latérales de la cuve ou proches d'elles. On peut ainsi à tout moment et pour toutes les fabrications placer les déflecteurs dans leur position active optimale très proche des bords du ruban de verre.

Les déflecteurs sont toutefois toujours placés au contact des parois latérales de la cuve afin qu'il n'y ait aucun passage de métal fondu entre-eux et lesdites parois latérales.

Dans une réalisation du dispositif de l'invention, celui-ci comprend au moins 3 couples de déflecteurs latéraux, de préférence articulés et orientables. Leur position et orientation dépend de la fabrication en cours. On peut par exemple, dans une fabrication d'un ruban de verre de 2 mm, disposer un premier couple de déflecteurs latéraux dans la partie aval de la cuve, là où le verre est déjà figé. Les deux autres couples de déflecteurs sont disposés dans la zone d'étirage.

D'autres réalisations du dispositif peuvent comprendre un nombre plus élevé de couples de déflecteurs. Chaque déflecteur peut avoir une forme généralement rectangulaire ou encore il peut présenter une extrémité oblique ou un décrochement de façon à ne pas venir au contact du ruban de verre lorsqu'il est très rapproché de la position moyenne du bord et alors que celui-là subit une modification de largeur au cours de la fabrication ce qui est inévitable. L'extrémité immergée dans le bain peut alors passer légèrement sous les bords du ruban de verre, étant entendu que ce passage ne vient pas perturber le courant d'étain aval.

Dans une autre réalisation du dispositif de l'invention, les déflecteurs peuvent présenter une longueur active variable, étant montés coulissants dans les parois latérales de la cuve ou encore étant plus ou moins télescopiques.

Les déflecteurs sont formés d'une matière inerte vis à vis du métal du bain et de l'atmosphère intérieure du four de flottage. Ils sont par exemple et avantageusement en graphite; ainsi en cas de contact avec le ruban de verre, le très faible coefficient de frottement n'empêche pas l'écoulement du ruban.

D'autres avantages et particularités de l'invention apparaîtront dans la description suivante d'exemples de réalisation de l'invention.

La figure 1 est une vue en plan d'une cuve contenant un bain de métal pour la fabrication de verre plat mince par flottage selon l'invention.

La figure 2 est une coupe selon la ligne II-II de la figure 1.

La figure 3 représente une cuve analogue à celle de la figure 1, équipée de quatre couples de déflecteurs orientables pivotant autour d'axes verticaux.

Les figures 4 et 5 représentent un déflecteur orientable à extrémité oblique.

La figure 6 représente une cuve équipée de six couples de déflecteurs pour la fabrication d'un ruban de verre de 2,6 mm d'épaisseur par exemple.

La figure 7 représente une cuve équipée de six couples de déflecteurs pour la fabrication d'un ruban de verre de 1,5 mm d'épaisseur par exemple.

La figure 8 représente des courbes de températures relevées dans le bain suivant une ligne le long des bords du ruban de verre, notamment dans la zone d'étirage.

La figure 9 représente des courbes de températures relevées transversalement dans le bain.

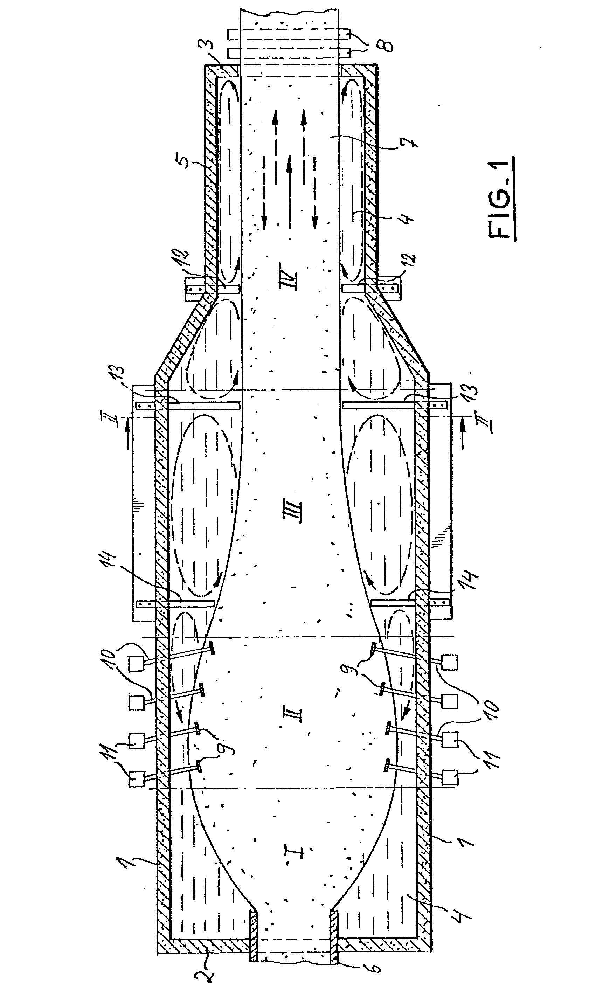

La figure 1 représente une cuve allongée pour la fabrication de verre mince par flottage. La cuve comprend des parois latérales 1 et des parois d'extrémité 2 et 3 respectivement à l'entrée et à la sortie de la cuve. La cuve, contenant un bain d'étain 4 en fusion, présente une partie aval de largeur moindre 5.

Du verre silicosodocalcique fondu est déversé sur le bain à son extrémité d'entrée, à partir d'un canal de distribution 6 disposé au-dessus de la paroi d'entrée de la cuve. Le débit du verre peut-être réglé et atteint par exemple 500 à 750 tonnes et plus par jour.

Des régulateurs de température non représentés sont incorporés au toit qui surmonte le bain. Ces régulateurs établissent le régime thermique du verre en le maintenant à l'état déformable jusqu'en fin de zone d'étirage.

Le bain de flottage comporte dans la fabrication de verre mince plusieurs zones représentées sur la figure 1 et que l'on peut distinguer de la façon suivante:

— une zone I d'étalement du verre à la suite de sa coulée sur le bain de métal, en amont,
— une zone II dans laquelle le ruban de verre en formation subit des forces longitudinales et dirigées vers l'extérieur sous les actions des rouleaux extracteurs et des rouleaux de bords. Dans cette zone, le verre subit déjà un étirage et s'amincit.
— une zone III où le ruban de verre prend sa forme définitive sous l'action des rouleaux extracteurs.
  Les zones II et III forment ensemble la zone d'étirage.
— une zone IV de consolidation où le ruban de verre figé se refroidit progressivement.

Après avoir été déversé sur le bain en fusion, le verre s'étale librement au maximum dans la zone I et présente une épaisseur d'environ 7 mm. Il se forme ainsi un ruban 7 qui se déplace vers l'aval sous l'effet de la traction des rouleaux extracteurs 8 extérieurs à la cuve.

L'épaisseur désirée est obtenue par l'action combinée de la traction des rouleaux extracteurs 8 et des rouleaux de bord moletés 9, généralement en acier, dont les axes sont légèrement obliques par rapport à la perpendiculaire à la direction d'avance du ruban. Ces rouleaux de bord sont reliés par arbre 10 à des moteurs 11 qui les entraînent généralement à des vitesses différentes selon leur position, et croissant vers l'aval. Ces rouleaux appliquent aux bords du ruban de verre en cours de formation des forces s'opposant à un rétrécissement du ruban de verre. Le ruban de verre subit déjà un étirage dans la zone de ces rouleaux de bord.

Le ruban de verre est ensuite amené à l'épaisseur désirée, par exemple 2 mm, par un étirage dû aux rouleaux extracteurs.

Le déplacement du ruban de verre dans la zone d'étirage provoque sous le ruban un courant de métal fondu dirigé vers l'aval de la cuve et désigné par courant aval. Ce courant aval vient buter contre la face de sortie de la cuve et se réfléchit pour former un courant amont dont on peut distinguer 3 parties: une partie centrale qui se déplace sous le ruban de verre et sous le courant aval et deux parties latérales entre le ruban de verre et les parois latérales de la cuve désignée par courants latéraux amont. Les courants principaux sont schématisés sur la figure par des flèches en pointillés.

Le dispositif selon l'exemple comprend, au niveau du rétrécissement dans la partie aval de la cuve, un couple de barrages latéraux formé de deux déflecteurs plats rectangulaires 12, en graphite qui, sur toute la profondeur du bain, s'étendent des parois latérales de la cuve jusqu'au voisinage des bords du ruban de verre et qui barrent ainsi totalement les deux courants latéraux amont dûs à la réflexion du courant aval sur la face de sortie de la cuve.

Le dispositif comprend encore un deuxième couple de barrages latéraux 13 situé à la limite aval de la zone d'étirage III et un troisième couple de barrages latéraux 14 situé à la limite amont de ladite zone d'étirage III, en aval des derniers rouleaux de bord 9. Ces deux derniers couples de barrages latéraux isolent thermiquement, notamment en surface, la zone d'étirage III en limitant les échanges de métal fondu contenu dans cette zone avec le métal plus froid provenant en partie du courant de métal fondu amont subsistant et le métal plus chaud de la partie amont du bain.

La présence des barrages latéraux selon l'invention, encore désignés par déflecteurs, dont les extrémités s'arrêtent au voisinage très proche du ruban de verre, à une distance de l'ordre de quelques centimètres et moins provoque encore une action hydrodynamique en canalisant le ruban de verre et par là lui assure une grande stabilité latérale.

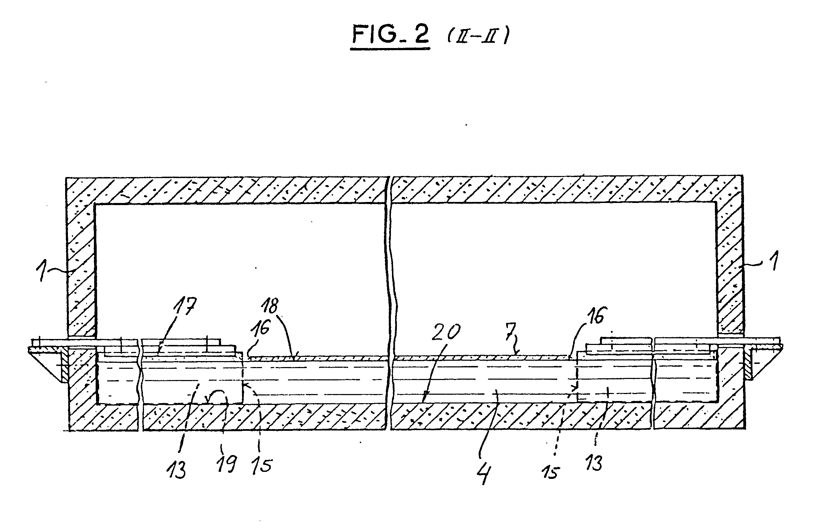

La figure 2 montre, dans une coupe transversale du dispositif, la situation des barrages latéraux, notamment par rapport au ruban de verre 7. Les distances séparant les extrémités 15 des barrages latéraux des bords 16 du ruban de verre sont de quelques centimètres et moins, de sorte que les courants latéraux amont sont interrompus totalement. Les barrages latéraux viennent au contact des parois latérales 1 de sorte que le métal ne peut pas s'écouler le long desdites parois. Alors que l'arête supérieure 17 des barrages émerge du bain dont le niveau est indiqué par la ligne 18, l'arête inférieure 19 se situe contre le fond 20 de la cuve.

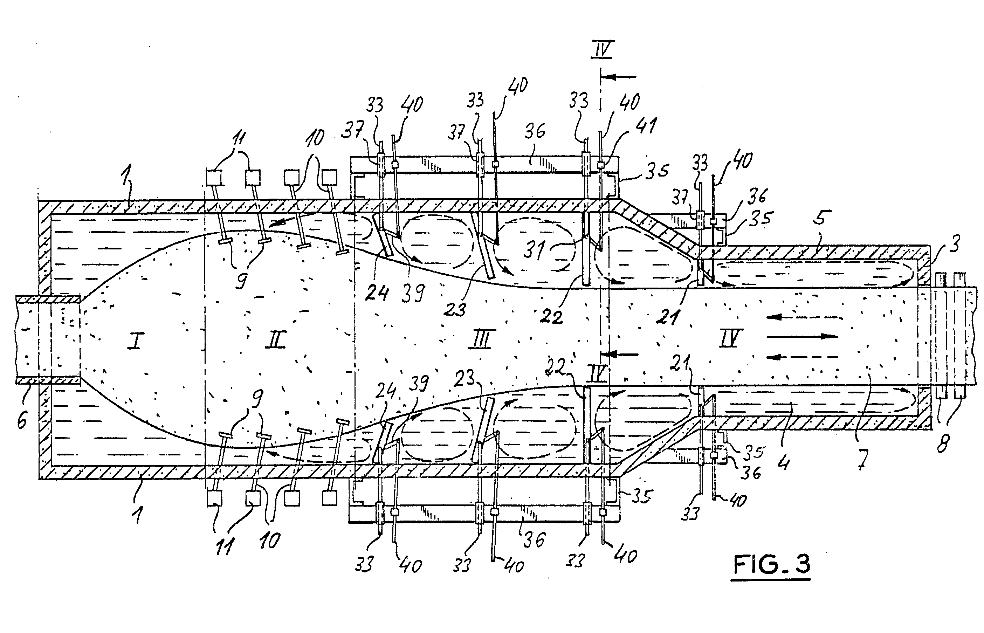

La figure 3 représente un dispositif équipé de quatre couples de déflecteurs orientables pivotant autour d'axes verticaux. Dans cette réalisation, un couple de déflecteurs 21 est disposé dans la zone IV au niveau du rétrécissement du bain. Les trois autres couples 22, 23, 24 sont disposés dans la zone d'étirage III où ils déterminent des cellules isolées les unes des autres. L'orientation des déflecteurs, de longueur déterminée est fonction de la fabrication en cours et de la largeur du ruban de verre et permet d'avoir une faible distance entre leur extrémité et les bords du ruban de verre. L'orientation se fait généralement vers l'aval comme représenté sur la figure 3. Grâce à ces déflecteurs orientables, on peut rechercher une position optimale et ceci pour chaque fabrication. Le cas échéant on peut encore, par simple rabattement le long de la paroi, annuler leur effet.

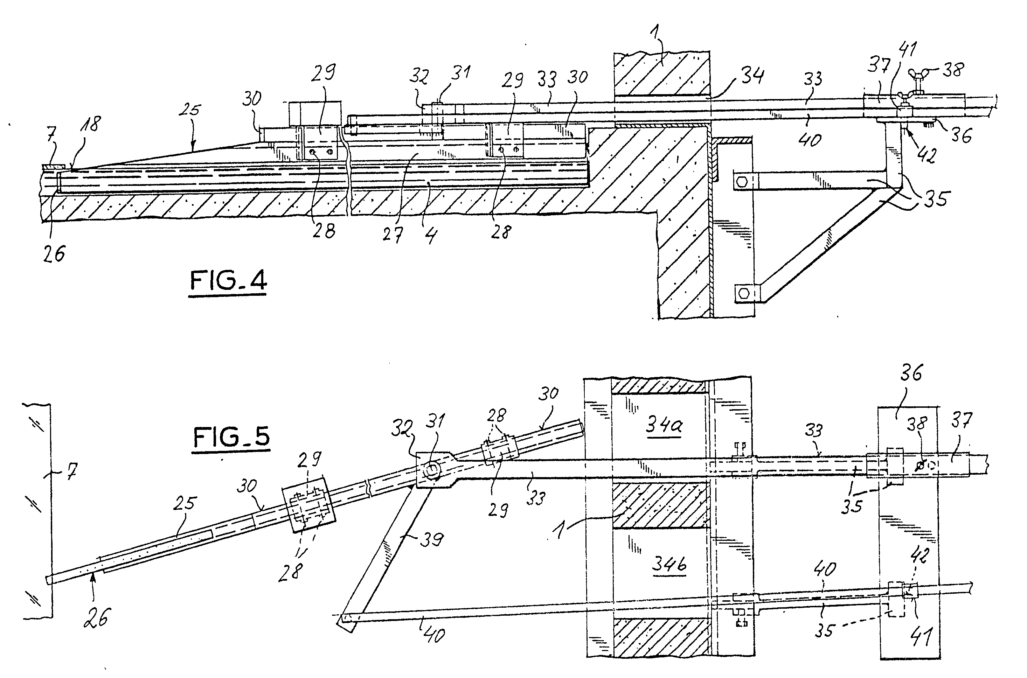

Les figures 4 et 5 représentent un déflecteur orientable dont l'extrémité oblique 25 est en partie immergée dans le bain 4 de sorte qu'elle peut éventuellement passer sous le ruban de verre 7, notamment en cas de variation de largeur dudit ruban, sans pour celà perturber le courant aval de métal. Le déflecteur est formé d'une plaque en graphite 26 d'environ 2 cm d'épaisseur, renforcée dans sa partie supérieure 27 par une épaisseur plus importante, de 180 cm de longueur environ et de 10 cm de hauteur, l'extrémité oblique 25 ayant une longueur d'environ 50 cm. La plaque en graphite est fixée par des vis 28 sur des plaques 29 portées par un profilé 30 sur lequel est monté solidairement un axe vertical 31 pouvant pivoter dans une bague 32 en graphite, elle-même solidaire d'une barre-support horizontale 33 passant à travers une ouverture 34a de la paroi latérale 1 de la cuve contenant le bain 4. Cette barre horizontale est montée à l'aide de profilés 35 et d'une plaque 36 sur la face extérieure de ladite paroi latérale. Elle peut coulisser dans son montage 37 de sorte que la distance du déflecteur à la paroi de la cuve peut toujours être ramenée à zéro après que ledit déflecteur ait subi une modification éventuelle de son inclinaison. Une vis 38 bloque le mouvement de translation de la barre. Pour commander le pivotement du déflecteur autour de l'axe 31, le dispositif comprend une barre horizontale 39 inclinée par rapport au déflecteur et fixée sur l'axe 31, à l'extrémité de laquelle s'articule une barre de commande 40 passant également par une ouverture 34b de la paroi latérale 1 de la cuve, cette barre de commande étant montée sur une bague verticale 41 capable de pivoter autour d'un axe vertical 42 passant à travers la plaque 36.

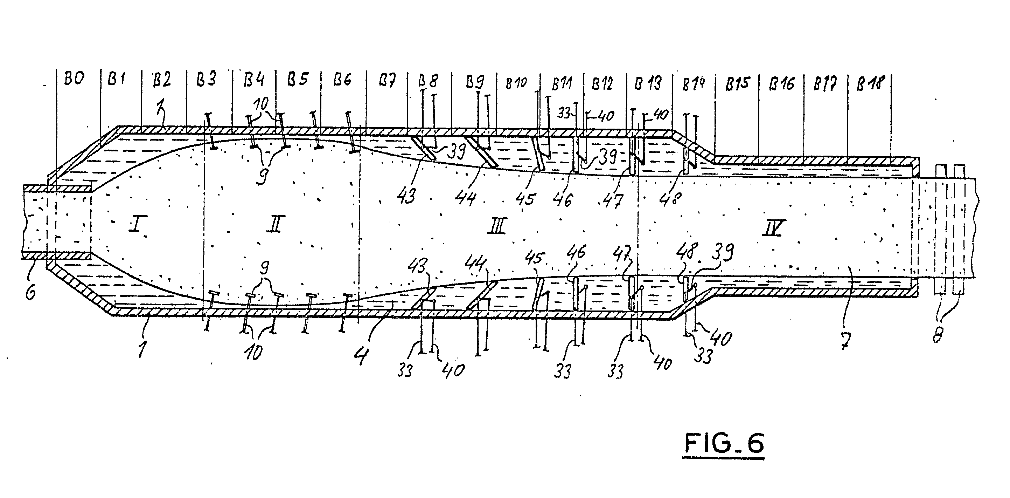

La figure 6 représente un dispositif selon l'invention équipé de six couples de déflecteurs pour la fabrication d'un ruban de verre de 2,6 mm d'épaisseur.

Pour définir leur position, la cuve a été découpée en 19 intervalles égaux désignés de B0 à B18. Chacun des intervalles est encore morcelé en 10 parties.

Dans une fabrication d'un ruban de verre de 2,6 mm d'épaisseur, le dispositif peut comprendre 5 couples de rouleaux de bord 9 disposés dans la zone II formé ici des intervalles B3 à B6. Le dispositif comprend 6 couples de déflecteurs 43, 44, 45, 46, 47, 48 dont la situation, pour chacun d'eux, est repérée par deux nombres, le premier nombre correspondant à l'intervalle, le deuxième nombre correspondant au dixième d'intervalle. Ici les déflecteurs sont en B8/1, B9/4, B10/9, B11/8, B13/1, B14/2. Cinq couples sont donc disposés dans la zone d'étirage III et un couple 48, dans la zone de refroidissement IV où le verre est beaucoup moins sensible aux variations de la température.

Les trois premiers couples de déflecteurs 43, 44 et 45 sont orientés vers l'aval. L'angle d'orientation par rapport à la perpendiculaire à l'axe de la cuve est fonction de la largeur du ruban de verre et des longueurs des déflecteurs qui peuvent être différentes.

Ainsi la longueur des déflecteurs 43 peut être de 100 centimètres, celle des déflecteurs 44 de 150 centimètres, celle des déflecteurs 45 de 170 centimètres, celle des déflecteurs 46 et 47 de 180 centimètres, alors que celle des déflecteurs 48 peut être de 100 centimètres.

Dans cette réalisation du dispositif selon l'invention, celui-ci ne comporte pas de déflecteurs dans la zone II des rouleaux de bords. En effet, dans cette zone le ruban de verre en formation peut être très rapproché des parois latérales de la cuve et de ce fait les courants latéraux amont sont inexistants.

D'autres réalisations du dispositif peuvent cependant comprendre des déflecteurs dans cette zone II. Ces déflecteurs peuvent encore avoir pour rôle de mieux isoler la zone d'étirage III du ruban de verre.

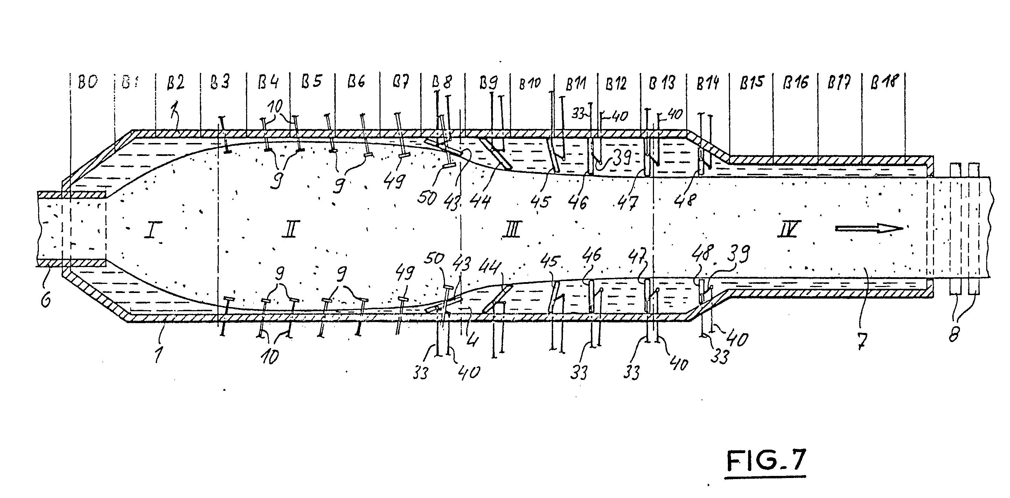

La figure 7 représente un dispositif équipé de six couples de déflecteurs pour la fabrication d'un ruban de verre de 1,5 mm d'épaisseur.

De même que dans le dispositif précédent décrit en relation avec la figure 6, celui-ci comporte 6 couples de déflecteurs disposés aux mêmes endroits, l'orientation des déflecteurs pouvant être différente. Ce dispositif comprend cependant deux couples de rouleaux de bord supplémentaires 49 et 50 situés respectivement en B7/6 et en B8/5.

De ce fait, le couple de déflecteurs 43 situé le plus en amont, en B8/1, se trouve dans la zone des rouleaux de bord II, plus étendue que précédemment.

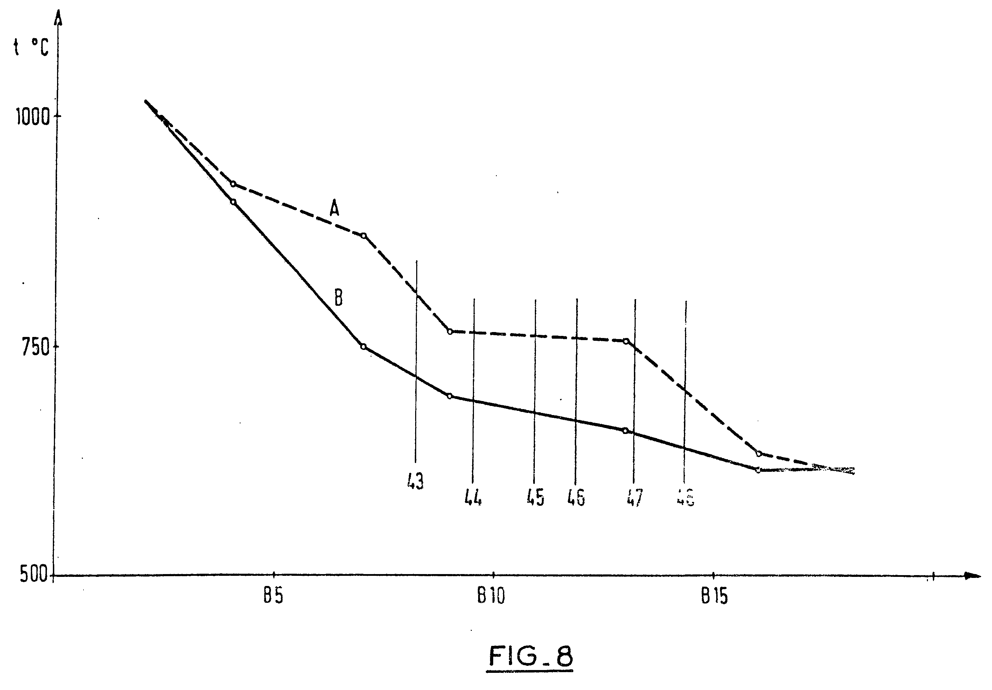

La figure 8 représente des courbes de températures de l'étain relevées suivant une ligne le long des bords du ruban du verre notamment dans la zone d'étirage. La courbe A correspond aux températures relevées dans une fabrication d'un verre de 2,6 mm d'épaisseur à l'aide d'un dispositif classique sans barrages latéraux. La courbe B correspond aux températures relevées dans une fabrication d'un verre de 2,6 mm d'épaisseur par la mise en oeuvre du dispositif décrit en relation avec la figure 6, c'est-à-dire équipé de 6 couples de déflecteurs. Les emplacements de ceux-ci sont indiqués par des traits verticaux.

On voit que la mise en place de déflecteurs selon l'invention donne une courbe de températures plus régulière et que ces températures sont inférieures à celles relevées dans un bain non équipé de déflecteurs. Les déflecteurs permettent donc de travailler à des températures plus basses et la zone d'étirage est décalée vers l'amont de la cuve. Ceci est intéressant à plus d'un titre comme déjà indiqué. Notamment la mise en place de déflecteurs procure des économies d'énergie et aussi un rapport de l'épaisseur des bords sur l'épaisseur du ruban plus favorable.

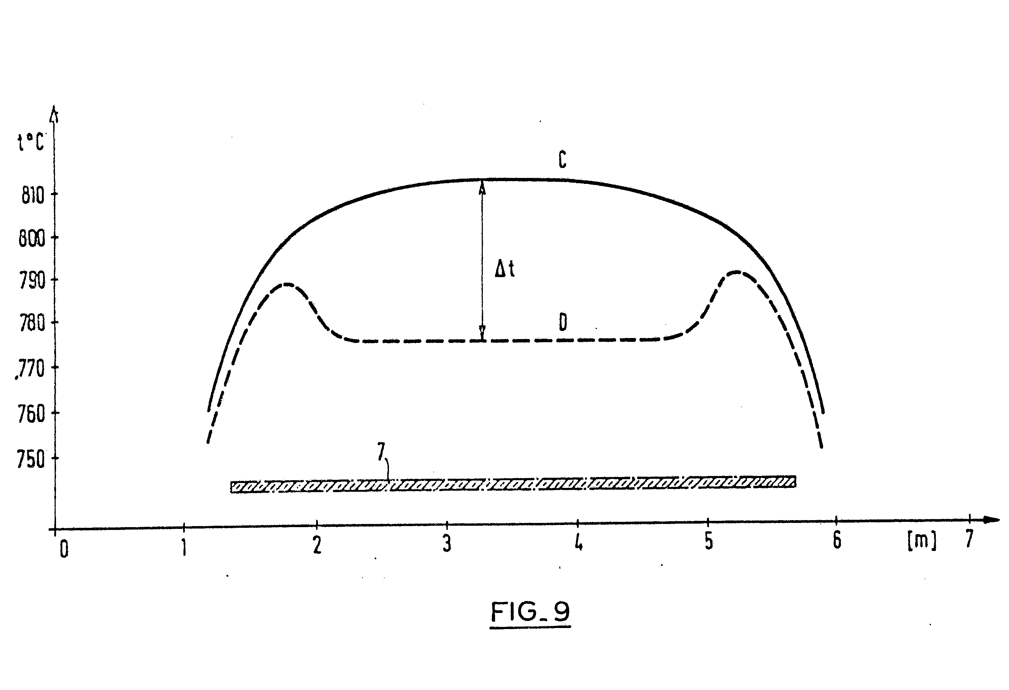

La figure 9 représente des courbes de température du bain relevées suivant une ligne transversale, au niveau de l'intervalle 9 dans la zone d'étirage dans une fabrication de verre de 2,6 mm d'épaisseur par la mise en œuvre du dispositif décrit en relation avec la figure 6. La courbe C correspond aux températures relevées à la surface du bain de métal alors que la courbe D correspond aux températures relevées au fond du bain de métal.

On remarque que les différences de températures entre la surface et le fond du bain sont très faibles dans les parties latérales du bain, de part et d'autre du ruban de verre dont la position est représentée par un trait mixte, alors que ces différences sont importantes et de l'ordre de 40° C environ dans la partie centrale du bain, sous le ruban de verre.

De ce fait, des courants de métal d'origine thermique peuvent se créer suivant une direction essentiellement verticale sous le ruban de verre. Celui-ci étant uniquement au contact avec la surface du bain qui présente une température homogène, ces courants n'ont pas d'influence néfaste sur la qualité du verre. En outre, ces courants n'influencent pas la stabilité du ruban de verre.

Le procédé selon l'invention permet de fabriquer du verre d'épaisseur très variable et notamment du verre mince d'épaisseur inférieure à 2 et même inférieure à 1,5 mm.

## Revendications

1. Procédé de fabrication de verre plat selon lequel on déverse du verre fondu sur un bain (4) de métal en fusion, on le fait avancer sous forme d'un ruban de verre (7) sur ledit bain de métal et on confère au ruban par accélération une vitesse d'extraction finale, ce qui provoque un entraînement du métal suivant un courant aval qui se réfléchit pour former un courant amont de retour plus froid, caractérisé en ce qu'on laisse le courant aval libre de s'écouler régulièrement sous l'action d'entraînement du ruban de verre et on interrompt totalement ou presque et uniquement les parties latérales du courant amont, sur toute leur profondeur, en plaçant des barrières latérales ou déflecteurs (12, 13, 14) symétriques par rapport à l'axe du ruban, au moins dans la zone d'étirage du verre, et on canalise le courant amont sous le courant aval et le ruban de verre.

2. Procédé selon la revendication 1, caractérisé en ce que l'on interrompt au moins trois fois les parties latérales du courant amont de part et d'autre du ruban de verre.

3. Procédé selon la revendication 2, caractérisé en ce que l'on interrompt les parties latérales du courant amont au moins deux fois dans la zone d'étirage du verre.

4. Procédé selon une des revendications 2 ou 3, caractérisé en ce que l'on interrompt les parties latérales du courant amont au moins une fois dans la partie aval du bain là où le verre est déjà figé.

5. Procédé selon une des revendications 1 à 4, caractérisé en ce que par la disposition des barrières latérales, on crée des différences de température entre la surface du bain et le fond du bain, importantes et de l'ordre de 40° C sous le ruban de verre et négligeables et de l'ordre de quelques degrés de part et d'autre dudit ruban de verre.

6. Dispositif pour la mise en œuvre du procédé selon une des revendications 1 à 5, comprenant une cuve allongée (1, 2, 3) contenant un bain de métal fondu (4), des moyens (6) d'amenée du verre sur le bain à débit réglé, des moyens (8, 9) pour le faire avancer sous forme d'un ruban (7) des régulateurs thermiques portant le ruban de verre à la viscosité voulue, des moyens (8) provoquant un étirage du ruban de verre, caractérisé en ce qu'il comprend des barrières latérales ou déflecteurs (12, 13, 14) symétriques par rapport à l'axe du ruban s'enfonçant sur toute la profondeur du bain pour interrompre totalement ou presque et uniquement les parties latérales du courant amont entre le ruban de verre et les parois latérales de la cuve, lesdits déflecteurs étant disposés au moins dans la zone d'étirage du verre, et s'étendant des parois latérales (1) de la cuve jusqu'à une distance inférieure à 10 cm des bords (16) du ruban de verre.

7. Dispositif selon la revendication 6, caractérisé en ce que l'extrémité de départ de chaque déflecteur est au contact d'une paroi latérale de la cuve.

8. Dispositif selon une des revendications 6 ou 7, caractérisé en ce qu'il comprend au moins 3 couples de déflecteurs.

9. Dispositif selon une des revendications 6 à 8, caractérisé en ce qu'il comprend au moins 1 couple de déflecteurs orientables.

10. Dispositif selon une des revendications 6 à 9, caractérisé en ce que tous les déflecteurs sont orientables.

11. Dispositif selon une des revendications 6 à 10, caractérisé en ce que les déflecteurs sont en graphite.

12. Dispositif selon une des revendications 6 à 11, caractérisé en ce qu'il comprend au moins deux couples de déflecteurs dans la zone d'étirage.

13. Dispositif selon une des revendications 6 à 12, caractérisé en ce que les déflecteurs présentent une extrémité oblique (25) pouvant s'étendre légèrement sous les bords du ruban de verre.

14. Application du procédé selon une des revendications 1 à 5 à la fabrication du verre mince d'épaisseur inférieure à 3 mm et de préférence inférieure à 2 mm.

**Patentansprüche**

1. Verfahren zur Herstellung von Flachglas, bei welchem die Glasschmelze auf ein Bad (4) aus einer Metallschmelze gegossen wird, auf dem man das Glas in Form eines Glasbandes (7) vorrücken läßt, wobei dem Band durch Beschleunigung eine Endabzugsgeschwindigkeit erteilt wird, was eine Mitnahme des Metalls stromabwärts bedingt, welches zurückgelenkt wird, und eine kältere Rücklaufströmung in Richtung stromaufwärts bildet, dadurch gekennzeichnet, daß man die stromabwärts gerichtete Strömung frei gleichmäßig unter Wirkung der Mitnahme durch das Glasband fließen läßt und einzig die seitlichen Abschnitte der stromaufwärts gerichteten Strömung auf ihrer gesamten Tiefe vollständig oder nahezu vollständig unterbricht, indem wenigstens in der Zone, in der das Glas ausgezogen wird, zur Achse des Glasbandes symmetrische seitliche Barrieren oder Ablenker (12, 13, 14) angeordnet werden und man die stromaufwärts gerichtete Strömung unter der stromabwärts gerichteten Strömung und dem Glasband kanalisiert.

2. Verfahren nach Anspruch 1, dadurch gekennzeichnet, daß die seitlichen Abschnitte der stromaufwärtigen Strömung auf beiden Seiten des Glasbandes wenigstens dreimal unterbrochen werden.

3. Verfahren nach Anspruch 2, dadurch gekennzeichnet, daß die seitlichen Abschnitte der stromaufwärts gerichteten Strömung wenigstens zweimal in der Zone, in der das Glas ausgezogen wird, unterbrochen werden.

4. Verfahren nach einem der Ansprüche 2 und 3, dadurch gekennzeichnet, daß die Seitenabschnitte der stromaufwärts gerichteten Strömung wenigstens einmal in dem stromabwärtigen Teil des Bades unterbrochen werden, wo das Glas bereits erstarrt ist.

5. Verfahren nach einem der Ansprüche 1 bis 4, dadurch gekennzeichnet, daß durch die Anordnung der seitlichen Barrieren Temperaturunterschiede zwischen der Badoberfläche und dem Boden des Bades erzeugt werden, die wesentlich sind und in der Größenordnung von 40°C unterhalb des Glasbandes liegen und die beiderseits des Glasbandes vernachlässigbar sind und in der Größenordnung von einigen Grad liegen.

6. Vorrichtung zur Durchführung des Verfahrens nach einem der Ansprüche 1 bis 5, mit einer langgestreckten Wanne (1, 2, 3), die ein Bad einer Metallschmelze (4) enthält, mit einer Einrichtung (6) zum Zuführen von Glas in geregelter Menge auf das Bad, Einrichtungen (8, 9) zum Vorrücken des Glases in Form eines Bandes (7), Wärmeregler, welche das Glasband auf die gewünschte Viskosität einstellen und mit einer Einrichtung (8), um das Glasband auseinanderzuziehen, dadurch gekennzeichnet, daß die Vorrichtung zur Bandachse symmetrische und sich über die gesamte Tiefe des Bades erstreckende seitliche Barrieren oder Ablenker (12, 13, 14) aufweist, um alleine die Seitenabschnitte der stromaufwärts gerichteten Strömung zwischen dem Glasband und den Seitenwänden der Wanne vollständig oder nahezu vollständig zu unterbrechen, wobei die Ablenker zumindest in der Ziehzone des Glases angeordnet sind und sich von den Seitenwänden (1) der Wanne bis zu einem Abstand geringer als 10 cm von den Rändern (16) des Glasbandes erstrecken.

7. Vorrichtung nach Anspruch 6, dadurch gekennzeichnet, daß das Ausgangsende eines jeden Ablenkers in Kontakt mit einer Seitenwand der Wanne sich befindet.

8. Vorrichtung nach Anspruch 6 oder 7, dadurch gekennzeichnet, daß die Vorrichtung mindestens drei Paare von Ablenkern aufweist.

9. Vorrichtung nach einem der Ansprüche 6 bis 9, dadurch gekennzeichnet, daß die Vorrichtung mindestens ein Paar von ausrichtbaren Ablenkern aufweist.

10. Vorrichtung nach einem der Ansprüche 6 bis 9, dadurch gekennzeichnet, daß sämtliche Ablenker ausrichtbar sind.

11. Vorrichtung nach einem der Ansprüche 6 bis 10, dadurch gekennzeichnet, daß die Ablenker aus Graphit sind.

12. Vorrichtung nach einem der Ansprüche 6 bis 11, dadurch gekennzeichnet, daß die Vorrichtung mindestens zwei Paare von Ablenkern in der Ziehzone aufweist.

13. Vorrichtung nach einem der Ansprüche 6 bis 12, dadurch gekennzeichnet, daß die Ablenker ein schräges Ende (25) aufweisen, so daß sich die Ablenker leicht unter die Ränder des Glasbands erstrecken können.

14. Anwendung des Verfahrens nach einem der Ansprüche 1 bis 5 auf die Herstellung von Dünnglas mit einer Dicke von weniger als 3 mm und vorzugsweise von weniger als 2 mm.

**Claims**

1. Method of making flat glass in which molten glass is fed on to a bath (4) of fused metal, it is caused to advance in the form of a glass ribbon (7) on said bath of metal and the ribbon is given, by acceleration, a final extraction speed which causes driving of the metal in a downstream current which is reflected to form a cooler return upstream current, characterised in that the downstream current is free to flow regularly under the driving action of the glass ribbon and the side parts only of the upstream current are interrupted substantially completely over their whole depth by side barriers or deflectors (12, 13, 14) which are symmetrical with respect to the axis of the ribbon, at least in the zone of drawing of the glass, and the upstream current is directed below the downstream current and the glass ribbon.

2. Method according to claim 1, characterised in that the side parts of the upstream current on both sides of the glass ribbon are interrupted at least three times.

3. Method according to claim 2, characterised in that the side parts of the upstream current are interrupted at least twice in the zone of drawing of the glass.

4. Method according to one of claims 2 and 3, characterised in that the side parts of the upstream current are interrupted at least once in the downstream part of the bath where the glass is already solid.

5. Method according to one of claims 1 to 4, characterised in that by the arrangement of the side barriers, there are created temperature differences between the surface of the bath and the bottom of the bath which are large and of the order of 40°C below the glass ribbon and which are negligible and of the order of a few degrees on both sides of said glass ribbon.

6. Device for carrying out a method according to one of claims 1 to 5, comprising an elongate vessel (1, 2, 3) containing a bath of molten metal (4), means (6) for supplying glass to the bath at a controlled rate, means (8, 9) for causing it to advance in the form of a ribbon (7), temperature regulators for bringing the glass ribbon to the desired viscosity, and means (8) causing drawing of the glass, characterised in that it comprises lateral barriers or deflectors (12, 13, 14) which are symmetrical with respect to the axis of the ribbon and extend over the whole depth of the bath to interrupt substantially completely the side parts only of the upstream current between the glass ribbon and the side walls of the vessel, said deflectors being positioned at least in the zone of drawing of the glass and extending from the side walls (1) of the vessel to a distance less than 10 cm from the edges (16) of the glass ribbon.

7. Device according to claim 6, characterised in that an end of each deflector is in contact with a side wall of the vessel.

8. Device according to one of claims 6 or 7, characterised in that it comprises at least 3 pairs of deflectors.

9. Device according to one of claims 6 to 8, characterised in that it comprises at least one pair of orientable deflectors.

10. Device according to one of claims 6 to 9, characterised in that all the deflectors are orientable.

11. Device according to one of claims 6 to 10, characterised in that the deflectors are made of graphite.

12. Device according to one of claims 6 to 11, characterised in that it comprises at least two pairs of deflectors in the zone of drawing.

13. Device according to one of claims 6 to 12, characterised in that the deflectors have an oblique end (25) which may extend slightly below the edges of the glass ribbon.

14. Application of the method according to one of claims 1 to 5 to manufacture of thin glass of thickness less than 3 mm and preferably less than 2 mm.

FIG. 1

FIG. 2 (II-II)

FIG.3

FIG. 4

FIG. 5

FIG.6

0 031 772

FIG.7

0 031 772

FIG.8

FIG. 9

0 031 772